# EUROPEAN PATENT APPLICATION

(11) **EP 4 790 379 A1**
(43) Date of publication of application: **12.08.2026**
(21) Application number: 26156574.1
(22) Date of filing: 05.02.2026
(51) Int. Cl.: G01M 5/00, G01M 7/00

(54) **EFFECTIVE RANGE PROVIDING APPARATUS, STRUCTURE EVALUATION APPARATUS, STRUCTURE EVALUATION SYSTEM, AND EFFECTIVE RANGE PROVIDING METHOD**

(30) Priority: 07.02.2025 JP 2025018968
(71) Applicant: KABUSHIKI KAISHA TOSHIBA, Kawasaki-shi, Kanagawa (JP)
(72) Inventor: WATABE, Kazuo, Kawasaki-shi, Kanagawa (JP); TAKAMINE, Hidefumi, Kawasaki-shi, Kanagawa (JP); FUMIKURA, Tomoya, Kawasaki-shi, Kanagawa (JP); HISAKUNI, Yousuke, Kawasaki-shi, Kanagawa (JP); AONO, Mamoru, Fukuoka, 812-0055 (JP); NIMURA, Daisuke, Fukuoka, 812-0055 (JP); NAKANO, Yoshihiko, Fukuoka, 812-0055 (JP); ICHIYAMA, Hitoshi, Fukuoka, 812-0055 (JP); KATSUSHIMA, Tatsurou, Fukuoka, 812-0055 (JP)
(74) Representative: Hoffmann Eitle

(57) **Abstract**

According to one embodiment, an effective range providing apparatus, a structure evaluation apparatus, a structure evaluation system, and an effective range providing method that enable an effective evaluation result to be obtained are provided. According to an embodiment, the effective range providing apparatus includes an effective range determiner and a provider. The effective range determiner determines an effective range for evaluation within a target area serving as an evaluation target for a deterioration state in a structure based on shape information about a shape of the structure on which a vehicle can travel and vehicle information about the vehicle traveling on the structure. The provider provides information indicating the effective range determined by the effective range determiner.

## Description

### FIELD

Embodiments described herein relate generally to an effective range providing apparatus, a structure evaluation apparatus, a structure evaluation system, and an effective range providing method.

### BACKGROUND

Technology for installing a plurality of sensors on the underside of a structure, such as a bridge on which vehicles travel, detecting elastic waves generated by the traveling of the vehicles using the plurality of sensors, and identifying deteriorated areas inside the structure based on the plurality of detected elastic waves has been proposed. This technology utilizes the fact that pavement strain caused by a wheel load during the traveling of the vehicles serves as a source of elastic waves (hereinafter referred to as an "elastic wave source"). However, a traveling position of a vehicle and a position of a deck panel constituting a structure serving as a deterioration state evaluation target differ according to each structure. Thus, valid evaluation results may not be obtained for all areas within the evaluation target range according to the structure.

### BRIEF DESCRIPTION OF THE DRAWINGS

FIG. 1 is a diagram showing an example of a positional relationship between a lane position and a deck panel on a road bridge.
FIGS. 2A and 2B is a diagram showing a result of generating an elastic wave source density distribution using an existing method.
FIG. 3 is a diagram showing an example of a configuration of an effective range providing apparatus in a first embodiment.
FIG. 4 is a flowchart showing a flow of an effective range setting process performed by the effective range providing apparatus in the first embodiment.
FIG. 5 is an explanatory diagram of a method for determining an effective range in the first embodiment.
FIG. 6 is an explanatory diagram of the method for determining an effective range in the first embodiment.
FIG. 7 is an explanatory diagram of a method for determining an effective range in the first embodiment.
FIG. 8 is an explanatory diagram of a method for setting an effective range count value within a target panel in the first embodiment.
FIG. 9 is a diagram showing a final result of the effective range count value within the target panel in the first embodiment.
FIG. 10 is a diagram showing a configuration of a structure evaluation system in the first embodiment.
FIG. 11 is a diagram showing an example of a functional configuration of a signal processor in the first embodiment.
FIG. 12 is a sequence diagram showing a flow of a deterioration state evaluation process performed by the structure evaluation system in the first embodiment.
FIG. 13A and 13B is a diagram showing an example of an elastic wave source density distribution and a strain distribution obtained as results of a vehicle running test using a concrete deck specimen.
FIG. 14 is a flowchart showing a flow of the effective range setting process performed by the effective range providing apparatus in the first embodiment.
FIG. 15 is an explanatory diagram of a method for setting an effective range count value within a target panel in a second embodiment.
FIG. 16 is a diagram showing a final result of the effective range count value within the target panel in the second embodiment.
FIG. 17 is a diagram showing a configuration of a structure evaluation system in a third embodiment.
FIG. 18 is a diagram showing an example of a correction value in the third embodiment.
FIG. 19 is a sequence diagram showing a flow of a deterioration state evaluation process performed by the structure evaluation system in the third embodiment.

### DETAILED DESCRIPTION OF THE INVENTION

The present invention provides an objective of the present invention is to provide an effective range providing apparatus, a structure evaluation apparatus, a structure evaluation system, and an effective range providing method that enable effective evaluation results to be obtained.

According to one embodiment, an effective range providing apparatus includes an effective range determiner and a provider. The effective range determiner determines an effective range for evaluation within a target area serving as an evaluation target for a deterioration state in a structure based on shape information about a shape of the structure on which a vehicle can travel and vehicle information about the vehicle traveling on the structure. The provider provides information indicating the effective range determined by the effective range determiner.

Hereinafter, an effective range providing apparatus, a structure evaluation apparatus, a structure evaluation system, and an effective range providing method according to embodiments will be described with reference to the drawings.

### (Overview)

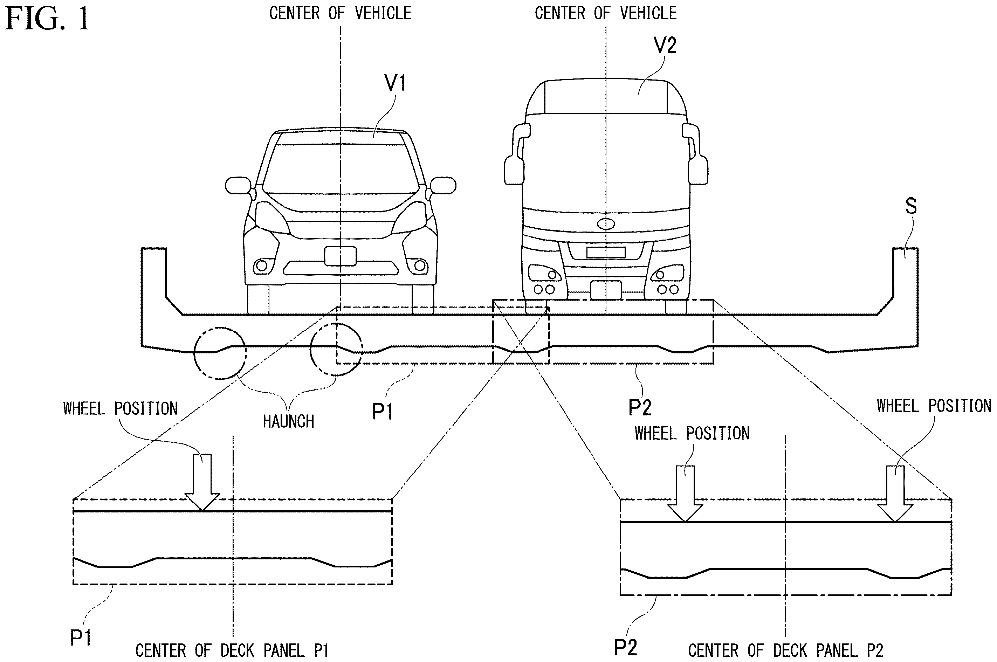

First, conventional problems will be described before details of the present embodiment are described. **In** the technology for identifying the deteriorated area within the structure described in the background art, an effective range for evaluation is unclear due to a positional relationship between a lane in an actual bridge structure and a panel (hereinafter referred to as a "target panel") serving as a deterioration state evaluation target. FIG. 1 is a diagram showing an example of a positional relationship between a lane position and a deck panel on a road bridge. FIG. 1 shows a state in which two vehicles V1 and V2 are traveling in different lanes on a structure S. For example, the vehicle V1 is traveling in a passing lane, and the vehicle V2 is traveling in a travel lane. **In** addition, this is merely an example, and the lanes in which the vehicles V1 and V2 travel are not limited thereto. **In** the following description, when the vehicles V1 and V2 are not particularly distinguished, they will be simply referred to as a vehicle V.

The structure S includes a plurality of deck panels. FIG. 1 shows a structure S with four deck panels as an example. That is, one deck panel is a panel located between haunches (circled areas in FIG. 1). When the deterioration state inside the structure S is evaluated, a plurality of sensors are installed in flat areas of the deck panels (excluding the haunches). Here, deck panels P1 and P2 among the four deck panels will be mainly described. Enlarged views of the deck panels P1 and P2 are shown in the lower part of FIG. 1.

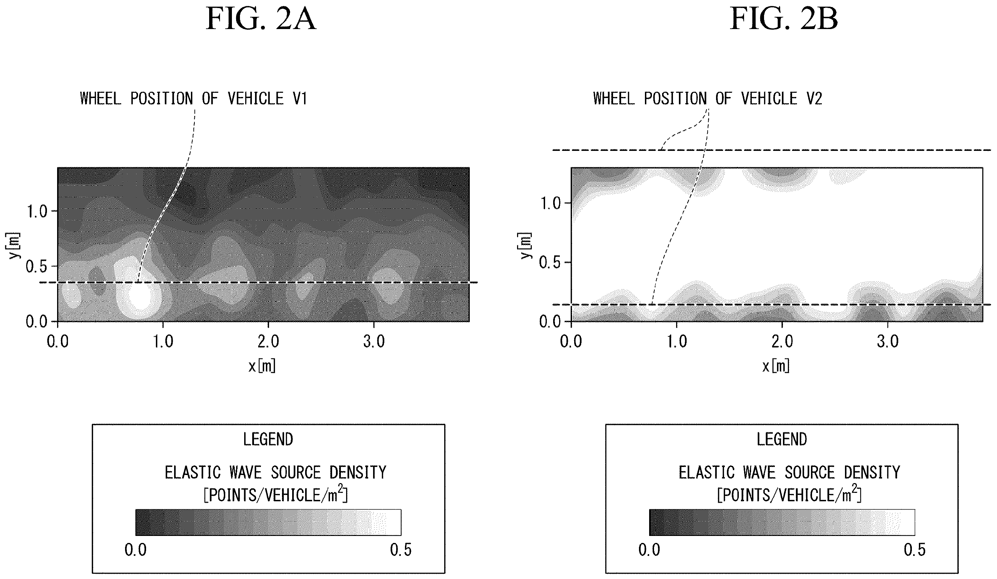

In the enlarged views, wheel positions of passenger cars (e.g., under the assumption that a tread width is 1560 mm) traveling in the centers of the lanes are indicated by arrows. Because one wheel of the vehicle V1 is in contact with the deck panel P1, the enlarged view of the deck panel P1 shows the position of one wheel. Because both wheels of the vehicle V2 are in contact with the deck panel P2, the enlarged view of the deck panel P2 shows the positions of the two wheels. Results of generating an elastic wave source density distribution using an existing method by installing a plurality of sensors on the deck panel P1 and the deck panel P2 are shown in FIGS. 2A and 2B. The elastic wave source density distribution is a distribution in which density values obtained in accordance with the number of elastic wave sources included in each area are shown for each predetermined area in the elastic wave source distribution in which a position of an elastic wave source is shown. **In** addition, the method described in Patent Document 1 may be used as the existing method.

FIGS. 2A and 2B shows an example of the elastic wave source density distribution in the deck panels P1 and P2. In FIGS. 2A and 2B, a range of the elastic wave source density distribution is a deck panel measurement range. The horizontal axis represents a length of the deck panel in a vehicle traveling direction, and the vertical axis represents a length of the deck panel in a direction orthogonal to the vehicle traveling direction. The vehicle traveling direction is a direction in which the vehicle travels on the road surface. The direction orthogonal to the vehicle traveling direction is a direction perpendicular to the vehicle traveling direction. The measurement range is within a range surrounded by the sensors. Moreover, the wheel positions are indicated by dotted lines on each elastic wave source density distribution. FIG. 2A shows an elastic wave source density distribution obtained for the deck panel P1, and FIG. 2B shows an elastic wave source density distribution obtained for the deck panel P2. Referring to FIG. 2B, results indicating that the deck panel P2 is generally sound over its entire surface, i.e., that there are many elastic wave sources (the density of elastic wave sources is high), are obtained. In contrast, in the deck panel P1, the result indicates that the soundness is low in a direction away from the wheel position of the vehicle V1 (e.g., the upper side in FIG. 2A), i.e., there are few elastic wave sources (the density of elastic wave sources is low).

Assuming that the deck panels P1 and P2 are adjacent panels and there is no significant difference in the soundness of the two panels, it is suggested that the upper side of the deck panel P1 did not have sufficient elastic wave sources due to its distance from the wheel position. Although elastic waves propagate within the structure S and are detected by sensors, the farther away from the wheel position that is the elastic wave source, the more attenuated the elastic waves become, such that detection processes of the sensors installed farther from the wheel location are made difficult. As a result, it is considered that sufficient elastic wave sources will not be obtained at positions farther from the wheel position. Although the wheel position in the deck panel P2, as in the deck panel P1, is located near the lower end of the measurement range, elastic wave sources are obtained over the entire area. For this reason, it is difficult to determine the range where sufficient elastic wave sources necessary for evaluating the deterioration state can be obtained, i.e., the effective range, simply from the wheel position within the measurement range. Therefore, in the following embodiment, a method for determining the effective range for evaluation will be described based on a positional relationship between the lane position of the structure S serving as a deterioration state evaluation target and the measurement range of the deck panel included in the structure S. In the following description, "evaluation" refers to a process for determining a degree of soundness of the structure, i.e., the deterioration state of the structure, based on certain criteria.

### (First embodiment)

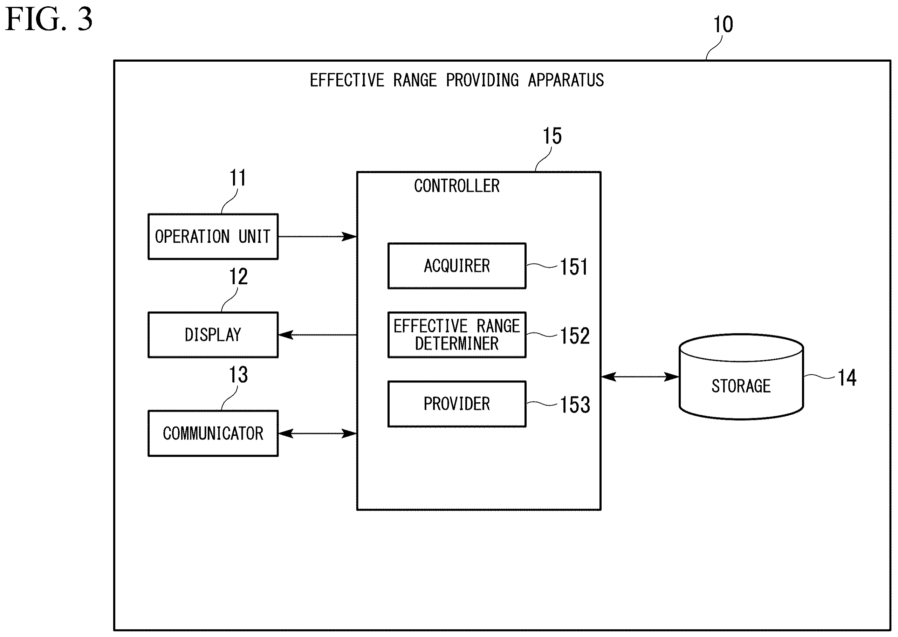

FIG. 3 is a diagram showing an example of a configuration of an effective range providing apparatus 10 in a first embodiment. The effective range providing apparatus 10 is an apparatus that determines an effective range. The effective range providing apparatus 10 includes an operation unit 11, a display 12, a communicator 13, a storage 14, and a controller 15.

The operation unit 11 receives an input instruction from a user. The operation unit 11 outputs the instruction input from the user to the controller 15. The user's instruction includes, for example, shape information about the structure S, information about a position of a target panel in the structure S, vehicle information, and the like. The shape information about the structure S is information indicating a cross-sectional view of the structure S shown in FIG. 1, and includes, for example, information about lanes constituting the structure S (including information such as a length, a width, and a position of each lane) and deck panel information (including information such as a length, a width, a thickness, and a material of each deck panel, a width of a flat area, a width of a haunch, and a shape of the haunch). The information about the position of the target panel in the structure S is information indicating a position of a target whose soundness is to be evaluated in the structure S and any concrete deck panel is considered. The vehicle information is information about one or more vehicles traveling on the structure S, and includes, for example, at least information about the vehicle's tread width.

The display 12 displays a screen for inputting information via the operation unit 11. The display 12 is an image display device such as a liquid crystal display or an organic electro luminescence (EL) display. The display 12 may also be an interface for connecting the image display device to the effective range providing apparatus 10. In this case, the display 12 generates a video signal for displaying a screen for inputting information via the operation unit 11 and outputs the video signal to the image display device connected thereto.

The communicator 13 communicates with another device. The communicator 13, for example, transmits information indicating the effective range determined by the controller 15 to the other device. Here, the other device is, for example, a device for evaluating the deterioration state of the structure S. The information indicating the effective range includes information for identifying the target panel and information indicating an area serving as the effective range on the target panel (position information of the effective range in the target panel).

The storage 14 stores various types of information. For example, the storage 14 stores information input via the operation unit 11. A configuration using a storage device such as a magnetic hard disk drive or semiconductor storage device is adopted.

The controller 15 controls the entire effective range providing apparatus 10. The controller 15 is configured using a processor such as a central processing unit (CPU) and a memory. The controller 15 functions as an acquirer 151, an effective range determiner 152, and a provider 153 by executing a program.

Some or all of the functional units of the acquirer 151, the effective range determiner 152, and the provider 153 may be implemented by hardware such as an application specific integrated circuit (ASIC), a programmable logic device (PLD), or a field programmable gate array (FPGA), or may be implemented by software and hardware in cooperation. The program may be recorded on a computer-readable recording medium. Examples of the computer-readable recording medium include portable media such as flexible disks, optical magnetic disks, ROMs, and CD-ROMs, and non-transitory storage media such as hard disks built into computer systems. The program may be transmitted via a telecommunications line.

Some of the functions of the acquirer 151, the effective range determiner 152, and the provider 153 do not need to be pre-installed on the effective range providing apparatus 10 and may be implemented by installing additional application programs on the effective range providing apparatus 10.

The acquirer 151 acquires various types of information. The acquirer 151, for example, acquires the shape information about the structure S, the information about the position of the target panel in the structure S, and the vehicle information input via the operation unit 11.

The effective range determiner 152 determines the effective range for evaluation within the target area serving as the evaluation target of the deterioration state of the structure S, based on the shape information about the structure S and the vehicle information acquired by the acquirer 151. The target area serving as the evaluation target of the deterioration state of the structure S is, for example, the area of the target panel. In other words, the effective range determiner 152 determines the effective range for evaluation within the target panel.

The provider 153 provides information indicating the effective range determined by the effective range determiner 152.

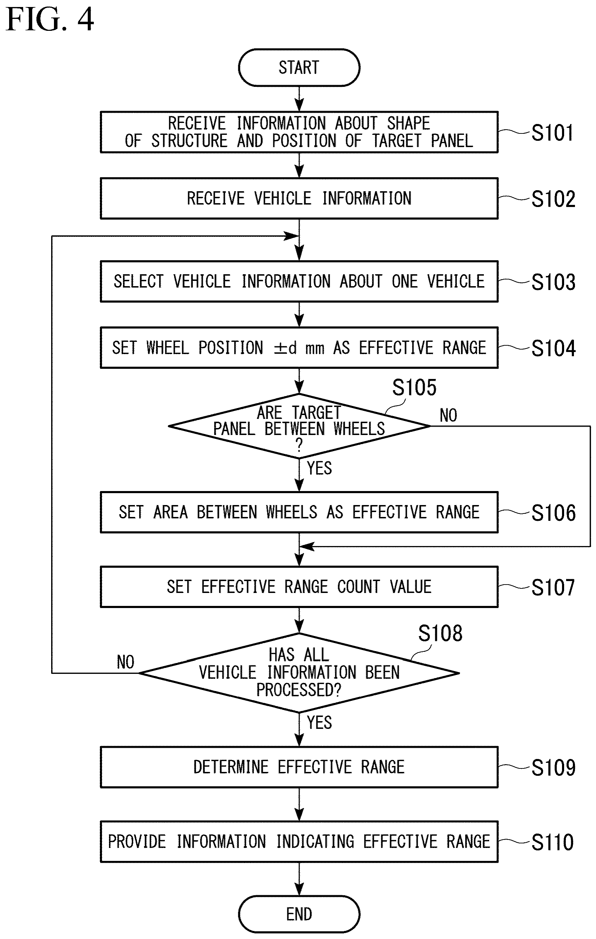

FIG. 4 is a flowchart showing a flow of the effective range setting process performed by the effective range providing apparatus 10 in the first embodiment. An operator operates the operation unit 11 of the effective range providing apparatus 10 to input the shape information about the structure S and the information about the position of the target panel in the structure S. The operation unit 11 outputs the input shape information about the structure S and the input information about the position of the target panel on the structure S to the controller 15 (step S101). Here, the case where position information for one target panel is input will be described as an example.

Subsequently, the operator operates the operation unit 11 of the effective range providing apparatus 10 to input vehicle information about one or more vehicles traveling on the structure S. More specifically, the operator inputs the information about the vehicles traveling on the input target panel. The operation unit 11 outputs the input vehicle information about the one or more vehicles to the controller 15 (step S102). **In** addition, it is desirable for the vehicle information to reflect vehicle-type-specific proportions of vehicles that actually travel on the bridge. The vehicle-type-specific proportions of vehicles that actually travel on the bridge. may be calculated by, for example, acquiring vehicle type information for the number of vehicles used for measurement from a server that stores information about types of vehicles that previously traveled on the structure S. Furthermore, the vehicle information may include information about a deviation of the vehicle's traveling position in a direction orthogonal to the vehicle traveling direction. That is, when a plurality of traveling vehicles are considered, in practice, each vehicle travels at a position deviated to the left or right from the center of the lane, and therefore it is assumed that wheel position information including the deviation in the left and right direction with respect to the center of the lane is included. **In** this case, the amount of deviation conforms to, for example, a normal distribution centered on the lane center (as a distribution in which the number of vehicles traveling along the lane center, i.e., vehicles with a deviation amount of zero, is the largest, and the number of vehicles decreases as the left-right deviation increases). The vehicle information may be input by transmitting data from the server or by reading the vehicle information held in the storage 14.

The effective range determiner 152 selects vehicle information about one vehicle from the vehicle information input via the operation unit 11 (step S103). Hereinafter, the vehicle identified from the selected vehicle information will be referred to as a target vehicle. The effective range determiner 152 sets a range of (the wheel position ± d mm) as the effective range when the target vehicle is traveling in a lane including the input target panel (step S104). Here, d is a predetermined value. **In** addition, the value of d varies with a weight of the vehicle, but is preferably a value of 500 mm from experimental results. Specifically, the effective range determiner 152 first identifies the wheel position of the target vehicle when it travels along the lane that includes the input target panel. The lane along which the target vehicle travels can be identified based on the shape information about the structure S and the position information of the target panel in the structure S. Therefore, the effective range determiner 152 can identify the wheel position of a case where the target vehicle has traveled along the lane including the input target panel. **In** this way, the effective range determiner 152 identifies a wheel position of the vehicle V in the target panel based on the shape information about the structure S, the vehicle information, and the position information of the target panel in the structure S.

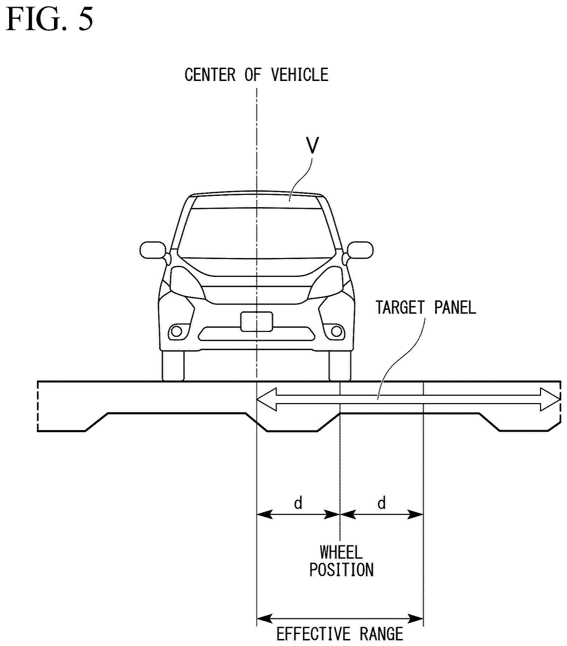

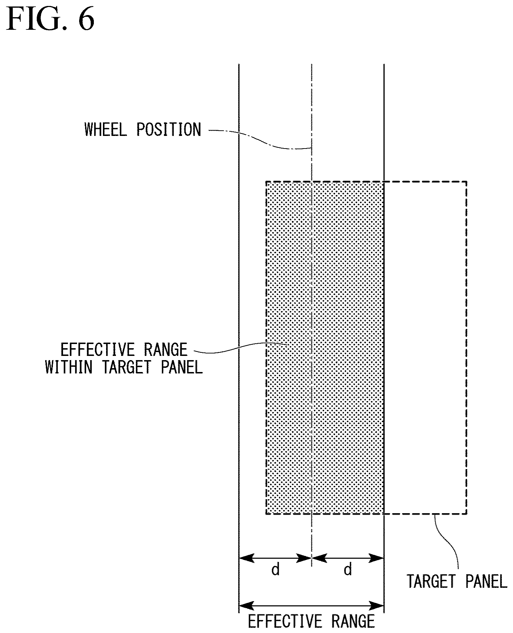

For example, in the case of the situation shown in FIG. 5, the left wheel of the target vehicle traveling in the center of the lane passes through the target panel. **In** this case, the effective range determiner 152 identifies the position of the target panel through which the left wheel of the target vehicle passes as the wheel position. Also, the effective range determiner 152 designates a range of d mm on each of the left and right sides (in the width direction of the target panel) as the effective range based on the identified wheel position. **In** this way, the effective range determiner 152 determines the effective range based on the identified wheel position of the vehicle V. A relationship between the target panel and the effective range at this time can be expressed as shown in FIG. 6. As shown in FIG. 6, a hatched area within the range of the target panel is determined to be the effective range of the target panel. **In** this way, an overlapping area of the effective range determined based on the range of the target panel and the wheel position of the target vehicle becomes the effective range for the structure evaluation.

When vehicle information related to a single type of vehicle is input as the vehicle information, because the tread width is the same, the effective range does not change. In other words, the effective range shown in FIG. 6 becomes the effective range for the structure evaluation. Subsequently, the effective range determiner 152 determines whether or not there is an area of the target panel sandwiched between the left and right wheels of the target vehicle and determined to be outside the effective range in step S104 (step S105). The effective range determiner 152 determines that the target panel is sandwiched between the left and right wheels of the target vehicle when there is an area of the target panel sandwiched between the left and right wheels of the target vehicle and determined to be outside the effective range in step S104. On the other hand, the effective range determiner 152 determines that the target panel is not sandwiched between the left and right wheels of the target vehicle when there is no area of the target panel sandwiched between the left and right wheels of the target vehicle and determined to be outside the effective range in step S104.

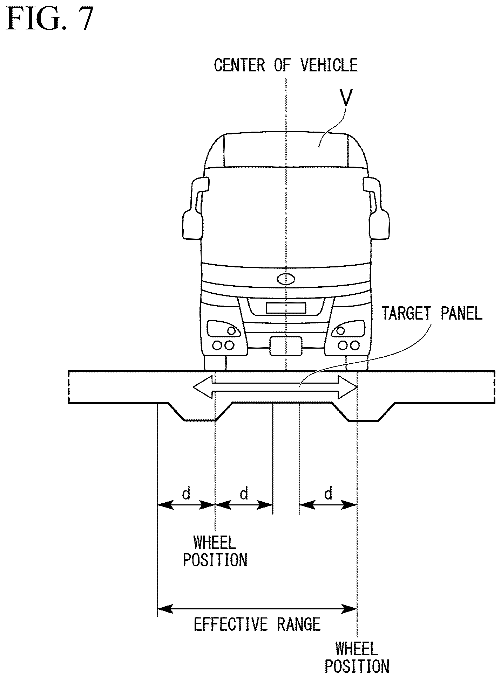

When the effective range determiner 152 determines that the target panel is sandwiched between the left and right wheels of the target vehicle (step S105-YES), the effective range determiner 152 determines the entire area between the left and right wheels as the effective range (step S106). This is because experimental results have shown that the evaluation is valid regardless of d in this case. An example of a case where the target panel is located between the left and right wheels of a traveling vehicle is shown in FIG. 7. As shown in FIG. 7, when the target panel is located between the left and right wheels of the traveling vehicle, the effective range also includes a central area between the left and right wheels excluded when a range of d mm on each of the left and right sides from the wheel position (in the width direction of the target panel) is defined as the effective range. Therefore, in the case of the situation shown in FIG. 7, the entire target panel becomes the effective range.

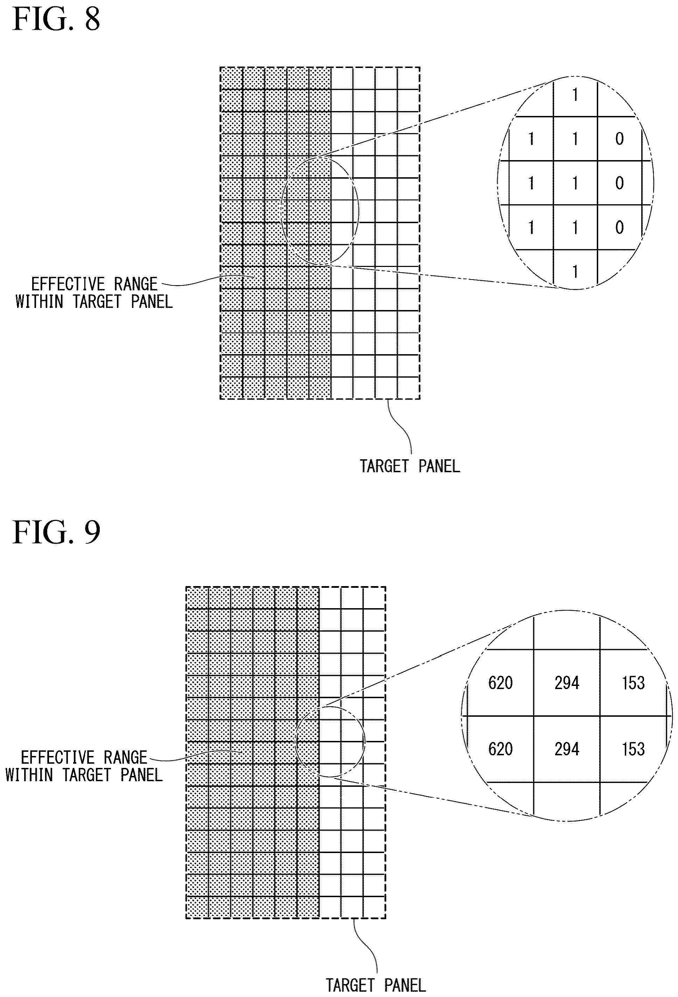

After the processing of step S106 or when the effective range determiner 152 determines that the target panel is not sandwiched between the left and right wheels of the target vehicle (step S105-NO), the effective range determiner 152 sets an effective range count value for the target vehicle (step S107). The effective range count value is a value indicating the number of areas determined to be effective ranges within the target panel. The effective range determiner 152 increments a corresponding area count value by 1 for the number of areas determined as effective ranges within the target panel. A method for setting the effective range count value within the target panel will be described below with reference to FIG. 8. **In** order to set an area count value within the target panel, the effective range determiner 152 divides the target panel in a mesh shape. Although a mesh size is, for example, 100 mm, the present invention is not limited and the mesh may be divided more coarsely or finely. Moreover, the mesh may be divided only vertically. Each of area divisions in the mesh shape is referred to as a cell.

The effective range determiner 152 increments the count value by 1 with respect to a cell belonging to the effective range set in the processing of step S104 or step S106, and does not increment the count value (sets the count value to 0) for a cell that does not belong to the effective range. For example, when the effective range is set in the processing of step S104 and then the effective range is set in the processing of step S106, the effective range determiner 152 sets the count value based on the effective range set in the processing of step S106. When the effective range is set only in the processing of step S104 (when the processing of step S106 is not performed), the effective range determiner 152 sets the count value based on the effective range set in the processing of step S104. In FIG. 8, an example in which the count value is set based on the effective range set in the processing of step S104 is shown. In FIG. 8, a counter value of "1" is set in a hatched cell of the target panel, and a counter value of "0" is set in a non-hatched cell.

Subsequently, the effective range determiner 152 determines whether or not all of the input vehicle information has been processed (step S108). When a process for setting the count value for determining the effective range based on all of the input vehicle information has been completed, the effective range determiner 152 determines that all of the vehicle information has been processed. On the other hand, when the process for setting the count value for determining the effective range based on all of the input vehicle information has not been completed, the effective range determiner 152 determines that all of the vehicle information has not been processed. When the effective range determiner 152 determines that all of the input vehicle information has not been processed (step S108-NO), the effective range determiner 152 iterates the subsequent processing from step S103. In this case, the effective range determiner 152 selects vehicle information that has not been selected in the processing of step S103.

On the other hand, when the effective range determiner 152 determines that all of the input vehicle information has been processed (step S108-YES), the effective range determiner 152 determines the effective range based on the count value (step S109). Specifically, the effective range determiner 152 extracts cells whose count values are greater than or equal to a threshold and sets a range formed by the extracted cells as the effective range in the target panel. For example, when the count value after all vehicle information is processed is in a state as shown in FIG. 9 and the threshold is 600, the effective range determiner 152 determines the hatched range with a count value of 600 or more as the effective range. The result shown in FIG. 9 is obtained by iteratively executing the process for determining the effective range within the target panel in accordance with the number of vehicle information. In other words, the result shown in FIG. 9 corresponds to a frequency distribution indicated by the number of effective range determinations. The effective range determiner 152 determines a final effective range based on the frequency distribution shown in FIG. 9. In addition, the threshold is merely an example and may be set in accordance with the number of input vehicle information or may be predetermined.

The effective range determiner 152 outputs information indicating the determined effective range to the provider 153. Here, the information indicating the effective range may include not only information indicating the area constituting the effective range on the target panel (position information of the effective range on the target panel) but also a count value for each cell. The provider 153 provides the information indicating the effective range output from the effective range determiner 152 (step S110). For example, the provider 153 may provide the effective range for an apparatus that performs structure evaluation or may provide information indicating the effective range by outputting the information to a screen of the display 12.

Although a configuration for determining the effective range for one target panel is shown in the above-described process, it is only necessary to execute the process shown in FIG. 4 for each target panel when effective ranges are determined in a plurality of target panels.

Although the effective range in the left and right direction based on the wheel position is set to d mm in step S104, this may vary with the type of traveling vehicle. Because elastic waves generated by the traveling of the vehicle are caused by pavement strain due to a vehicle load, it is considered that the range in which elastic waves are generated is wider for larger vehicles with heavier vehicle loads. Therefore, it is desirable to set the effective range for large vehicles to D mm (> d mm). The effective range can be set based on any one or a combination of a vehicle type, a vehicle weight, a maximum load capacity, and a maximum passenger capacity. For example, the vehicle weight included in the vehicle information can be compared with a threshold, the effective range can be set to D mm when the vehicle weight is large (e.g., when the vehicle weight is greater than the threshold), the effective range can be set to d mm when the vehicle weight is small (e.g., when the vehicle weight is less than or equal to the threshold), and the like. In addition, even when the maximum load capacity or the maximum passenger capacity is used, the effective range can be set using a method similar to that for the vehicle weight.

Moreover, when the effective range is set based on a combination, for example, the effective range may be set to D mm if the condition that the vehicle weight (first information) is greater than a first threshold and the vehicle weight (second information) is greater than a second threshold (the first threshold ≠ the second threshold) is satisfied and the effective range may be set to d mm otherwise. The conditions for the combination are not limited to those described above and may be set as appropriate. For example, the effective range may be set to D mm if the value indicated in the first information is greater than the first threshold and the value indicated in the first information is less than or equal to the second threshold and the effective range may be set to d mm otherwise.

Although the effective range determiner 152 determines the effective range based on a plurality of vehicle information in FIG. 4, the effective range may also be set based on a type of representative vehicle traveling on the structure S serving as the evaluation target. In the case of this configuration, the processing of step S108 in FIG. 4 is completed with first vehicle information, and the effective range determiner 152 executes the processing of step S109. Therefore, the threshold used in step S109 is 1. When the type of the representative vehicle is selected, it may be, for example, a vehicle that travels most frequently (e.g., a specific compact passenger car). On the other hand, the vehicle may be defined as an averaged vehicle representing all types of traveling vehicles (which need not correspond to an actual existing vehicle). For example, vehicle specifications are defined by calculating an average vehicle weight, an average weight for each axle, and an average left-right wheel position (tread) across all traveling vehicles.

### (Application example)

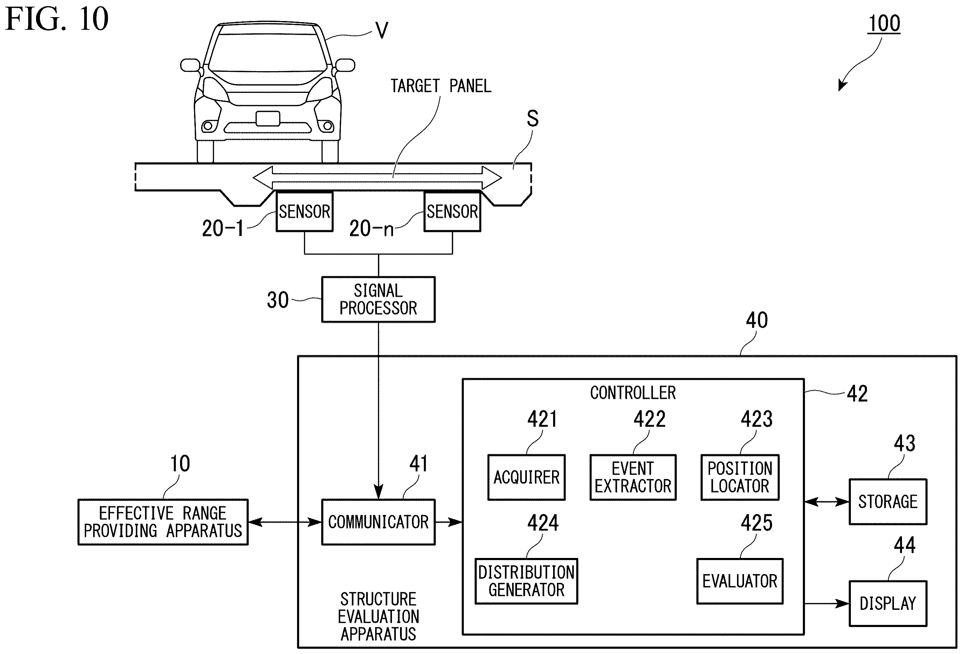

Next, a configuration of a case where the effective range information determined by the above-described effective range providing apparatus 10 is applied to a system for evaluating the deterioration state of the structure will be described. FIG. 10 is a diagram showing a configuration of a structure evaluation system 100 in the first embodiment. The structure evaluation system 100 is used to evaluate the soundness of the structure S. Although the structure S is a bridge in the following description, the structure S does not need to be limited to bridges. The structure S may be any structure that generates elastic waves due to the occurrence or progression of cracks or external impacts (e.g., rain, artificial rain, or the like). **In** addition, a bridge is not limited to a structure constructed over a river or a valley, and also includes various structures (e.g., highway viaducts) installed above ground level and the like.

Deteriorate that affects the evaluation of the deterioration state of the structure S includes, for example, cracks, cavities, landslides, and other deteriorate inside the structure that interfere with the propagation of elastic waves. Here, the cracks include vertical cracks, horizontal cracks, diagonal cracks, and the like. The vertical cracks are cracks that occur in a direction vertical to the road surface. The horizontal cracks are cracks that occur in a direction horizontal to the road surface. The diagonal cracks are cracks that occur in a direction other than the direction horizontal or vertical to the road surface. The landslides are deterioration that causes concrete to turn into landslide-like material, mainly at the boundary between the asphalt and the concrete deck.

The structure evaluation system 100 includes an effective range providing apparatus 10, a plurality of sensors 20-1 to 20-n, a signal processor 30, and a structure evaluation apparatus 40. Each of the plurality of sensors 20-1 to 20-n and the signal processor 30 are communicatively connected via a wired link. The signal processor 30 and the structure evaluation apparatus 40 are communicatively connected to each other via a wired or wireless link. The effective range providing apparatus 10 and the structure evaluation apparatus 40 are communicatively connected to each other via a wired or wireless link. **In** addition, in the following description, when the sensors 20-1 to 20-n are not distinguished, they will be referred to as sensors 20.

As shown in FIG. 10, when a vehicle V passes over the structure S, a load is applied to the road surface due to contact between the running units (e.g., tires) of the vehicle V and the road surface. Deflection caused by the load generates numerous elastic waves within the structure S. Each sensor 20 installed on the underside of the structure S can detect the elastic waves generated within the structure S.

When the effective range information determined by the effective range providing apparatus 10 is applied to the system for evaluating the deterioration state of the structure, a process of the effective range providing apparatus 10 is executed before a process of the structure evaluation apparatus 40 is executed. If the target panel of the structure S serving as the evaluation target is determined, the effective range providing apparatus 10 first executes a process for determining the effective range of the target panel. Also, the deterioration state of the target panel is evaluated based on information indicating the effective range of the target panel determined by the effective range providing apparatus 10.

The effective range providing apparatus 10 determines the effective range for each target panel using the above-described method. Also, the effective range providing apparatus 10 provides information indicating the determined effective range for each target panel to the structure evaluation apparatus 40.

The sensor 20 includes a piezoelectric element and detects elastic waves generated from within the structure S. The sensor 20 is installed at a position where elastic waves on the surface of the structure S can be detected. For example, sensors 20-1 to 20-n are installed spaced apart at equal or different intervals in the vehicle traveling direction and the direction orthogonal to the vehicle traveling direction on any one of a road surface, a side surface, and a bottom surface. The sensor 20 converts the detected elastic waves into an electrical signal. **In** the following description, a case where the sensor 20 is installed on the bottom surface of the structure S will be described as an example.

The sensor 20 uses a piezoelectric element with sensitivity in the range of, for example, 10 kHz to 1 MHz. The sensor 20 includes a resonance type having a resonance peak within a frequency range, or a broadband type in which resonance is suppressed, and any type of sensor 20 may be used. The method by which the sensor 20 detects elastic waves includes a voltage-output type, a resistance-change type, or a capacitance type and any detection method may be used.

An acceleration sensor may be used instead of the sensor 20. In this case, the acceleration sensor detects elastic waves generated inside the structure S. Also, the acceleration sensor converts the detected elastic waves into an electrical signal by performing the same process as the sensor 20.

For example, an amplifier and an analog-to-digital (A/D) converter (not shown) are provided between the sensor 20 and the signal processor 30.

The amplifier amplifies the electrical signal output from the sensor 20. The amplifier outputs the amplified electrical signal to the A/D converter. The amplifier amplifies the electrical signal to a level that can be processed by, for example, the A/D converter.

The A/D converter quantizes the amplified electrical signal and converts it into a digital signal. The A/D converter outputs the digital signal to the signal processor 30.

The signal processor 30 receives the digital signal output from the A/D converter as an input. The signal processor 30 performs signal processing on the input digital signal. The signal processing performed by the signal processor 30 includes, for example, noise removal, parameter extraction, and the like. The signal processor 30 generates transmission data including a digital signal after the signal processing. The signal processor 30 outputs the generated transmission data to the structure evaluation apparatus 40.

The signal processor 30 is configured using analog or digital circuits. The digital circuit is implemented, for example, by an FPGA or a microcomputer. The digital circuit may also be implemented by dedicated large-scale integration (LSI). Moreover, the signal processor 30 may be equipped with a non-volatile memory such as a flash memory or a removable memory.

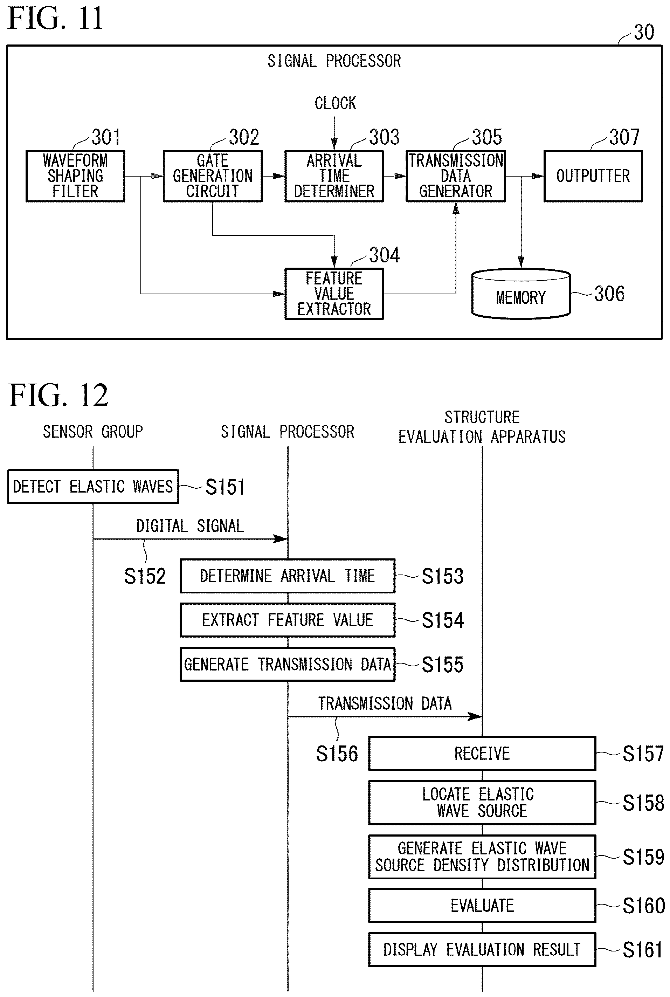

FIG. 11 is a diagram showing an example of a functional configuration of the signal processor 30 in the first embodiment. The signal processor 30 includes a waveform shaping filter 301, a gate generation circuit 302, an arrival time determiner 303, a feature value extractor 304, a transmission data generator 305, a memory 306, and an outputter 307.

The waveform shaping filter 301 removes a noise component outside a predetermined band from the input digital signal. The waveform shaping filter 301 is, for example, a digital bandpass filter (BPF). The waveform shaping filter 301 outputs a digital signal after noise removal (hereinafter referred to as a "noise-removed signal") to the gate generation circuit 302 and the feature value extractor 304.

The gate generation circuit 302 receives the noise-removed signal output from the waveform shaping filter 301 as an input. The gate generation circuit 302 generates a gate signal based on the input noise-removed signal. The gate signal indicates whether or not the waveform of the noise-removed signal is sustained.

The gate generation circuit 302 is implemented, for example, by an envelope detector and a comparator. The envelope detector detects an envelope of the noise-removed signal. The envelope is extracted, for example, by squaring the noise-removed signal and performing a predetermined process (e.g., a process using a low-pass filter or a Hilbert transform) on the squared output value. The comparator determines whether or not the envelope of the noise-removed signal is greater than or equal to a predetermined threshold.

When the envelope of the noise-removed signal is greater than or equal to the predetermined threshold, the gate generation circuit 302 outputs a first gate signal indicating that the waveform of the noise-removed signal is sustained to the arrival time determiner 303 and the feature value extractor 304. On the other hand, when the envelope of the noise-removed signal is less than the predetermined threshold, the gate generation circuit 302 outputs a second gate signal indicating that the waveform of the noise-removed signal is not sustained to the arrival time determiner 303 and the feature value extractor 304. Although the gate generation circuit 302 is configured to determine whether the waveform of the noise-removed signal is sustained based on the envelope, the gate generation circuit 302 may also process the noise-removed signal itself or a signal to which an absolute value has been applied. The threshold used for this gate generation is referred to as a measurement threshold.

The arrival time determiner 303 receives a clock output from a clock source such as a crystal oscillator (not shown) and a gate signal output from the gate generation circuit 302 as inputs. The arrival time determiner 303 determines the elastic wave arrival time using the clock input while the first gate signal is being input. The arrival time determiner 303 outputs the determined elastic wave arrival time to the transmission data generator 305 as time information. The arrival time determiner 303 does not perform any processing while the second gate signal is being input. The arrival time determiner 303 generates cumulative time information from the power-on time based on the signal from the clock source. Specifically, the arrival time determiner 303 may be a counter that counts a clock edge, and the value of the counter's register may be used as the time information. The counter's register is determined to have a predetermined bit length.

The feature value extractor 304 receives the noise-removed signal output from the waveform shaping filter 301 and the gate signal output from the gate generation circuit 302 as inputs. The feature value extractor 304 extracts a feature value of the noise-removed signal using the noise-removed signal input while the first gate signal is being input. The feature value extractor 304 does not perform a process while the second gate signal is being input. The feature value is information indicating a feature of the noise-removed signal.

Feature values include, for example, a waveform amplitude [mV], a waveform rise time [usec], gate signal duration [usec], a zero-cross count [times], waveform energy [arb.], a frequency [Hz], a root mean square (RMS) value, and the like. The feature value extractor 304 outputs parameters related to the extracted feature values to the transmission data generator 305. When the parameters related to the feature values are output, the feature value extractor 304 associates a sensor ID with the parameter related to the feature value. The sensor ID indicates identification information for identifying the sensor 20 installed in an area (hereinafter referred to as an "evaluation area") where the soundness of the structure S serves as an evaluation target.

The waveform amplitude is, for example, a maximum amplitude value of the noise-removed signal. The waveform rise time is, for example, a time T1 from the time when the gate signal starts to rise to the time when the noise-removed signal reaches its maximum value. The gate signal duration is, for example, a period in time from the time when the gate signal starts to rise to the time when the amplitude falls below a predetermined value. The zero-cross count is, for example, the number of times the noise-removed signal crosses a reference line passing through a zero value.

The waveform energy is, for example, a value obtained by time-integrating the squared amplitude of the noise-removed signal at each point in time. In addition, the definition of the energy is not limited to the above-described example and may be approximated using, for example, the envelope of the waveform. The frequency is a frequency of the noise-removed signal. The RMS value is, for example, a value calculated by squaring the amplitude of the noise-removed signal at each point in time and taking the square root.

The transmission data generator 305 receives the sensor ID, the time information, and parameters related to the feature values as inputs. The transmission data generator 305 generates transmission data including the input sensor ID, the input time information, and the input parameters related to the feature values.

The memory 306 stores the transmission data. The memory 306 is, for example, a dual-port random access memory (RAM).

The outputter 307 sequentially outputs the transmission data stored in the memory 306 to the structure evaluation apparatus 40.

The description continues by referring back to FIG. 10. The structure evaluation apparatus 40 evaluates the deterioration state of the structure S based on the elastic waves detected by each sensor 20 and the effective range determined by the effective range providing apparatus 10. Specifically, the structure evaluation apparatus 40 evaluates the deterioration state of the target panel included in the structure S. The structure evaluation apparatus 40 includes a communicator 41, a controller 42, a storage 43, and a display 44.

The communicator 41 communicates with other devices. For example, the communicator 41 receives transmission data output from the signal processor 30. For example, the communicator 41 receives information indicating the effective range output from the effective range providing apparatus 10.

The controller 42 controls the entire structure evaluation apparatus 40. The controller 42 is configured using a processor such as a CPU and a memory. By executing a program, the controller 42 functions as an acquirer 421, an event extractor 422, a position locator 423, a distribution generator 424, and an evaluator 425.

Some or all of the functional units of the acquirer 421, the event extractor 422, the position locator 423, the distribution generator 424, and the evaluator 425 may be implemented by hardware such as an ASIC, a PLD, or an FPGA, or may be implemented by software and hardware in cooperation. The program may be recorded on a computer-readable recording medium. Examples of the computer-readable recording medium include portable media such as flexible disks, optical magnetic disks, ROMs, and CD-ROMs, and non-transitory storage media such as hard disks built into computer systems. The program may be transmitted via a telecommunications line.

Some of the functions of the acquirer 421, the event extractor 422, the position locator 423, the distribution generator 424, and the evaluator 425 do not need to be pre-installed in the structure evaluation apparatus 40, and may be implemented by installing additional application programs in the structure evaluation apparatus 40.

The acquirer 421 acquires various types of information. For example, the acquirer 421 acquires transmission data and information indicating the effective range received by the communicator 41.

The event extractor 422 extracts transmission data for one event from the transmission data stored in the storage 43. An event is an elastic wave generating event that has occurred in the structure S. **In** the present embodiment, the elastic wave generating event is the passage of a vehicle V over a road surface. When one event has occurred, elastic waves are detected by a plurality of sensors 20 at approximately the same time. **In** other words, the storage 43 stores transmission data related to elastic waves detected at approximately the same time. Therefore, the event extractor 422 sets a predetermined time window and extracts all transmission data whose arrival time falls within a time window range as transmission data for one event. The event extractor 422 outputs the extracted transmission data for one event to the position locator 423.

A time window range Tw may be determined using an elastic wave propagation velocity v in the structure S serving as the target and a maximum sensor spacing dmax so that it is in the range of Tw ≥ dmax/v. To avoid erroneous detection, because it is desirable to set Tw to as small a value as possible, Tw = dmax/v can substantially be used. The elastic wave propagation velocity v may be calculated in advance.

The position locator 423 locates the elastic wave source based on the sensor position information and the sensor ID and time information included in each of the plurality of transmission data items extracted by the event extractor 422.

The sensor position information includes information about an installation position of the sensor 20 in association with the sensor ID. For example, the sensor position information includes the information about the installation position of the sensor 20 such as latitude and longitude or distances from a reference position of the structure S in the horizontal direction and the vertical direction. The position locator 423 holds the sensor position information in advance. The sensor position information may be stored in the position locator 423 at any timing before the position locator 423 locates the elastic wave source.

The sensor position information may be stored in the storage 43. In this case, the position locator 423 acquires the sensor position information from the storage 43 at a timing when the position is located. The position of the elastic wave source may be located using a Kalman filter, a least squares method, or the like. The position locator 423 outputs position information about the elastic wave source obtained during a measurement period to the distribution generator 424.

The distribution generator 424 receives position information about a plurality of elastic wave sources output from the position locator 423 as an input. The distribution generator 424 generates an elastic wave source distribution using the input position information about the plurality of elastic wave sources. More specifically, the distribution generator 424 generates the elastic wave source distribution by displaying points indicating the positions of the elastic wave sources on virtual data representing the structure S serving as the evaluation target in a state in which the horizontal axis represents the distance in the traffic direction and the vertical axis represents the distance in the width direction. The distribution generator 424 uses the elastic wave source distribution to generate an elastic wave source density distribution. The elastic wave source density distribution is a distribution in which density values calculated in accordance with the number of elastic wave sources included in each predetermined area in the elastic wave source distribution are displayed.

The evaluator 425 evaluates the deterioration state of the structure S based on the elastic wave source density generated by the distribution generator 424 and the information indicating the effective range acquired by the acquirer 421. Specifically, the evaluator 425 evaluates only an area identified from the information indicating the effective range as the evaluation target on the elastic wave source density distribution, and does not designate other areas as the evaluation target. For example, in the area identified from the information indicating the effective range, the evaluator 425 evaluates an area where the density of elastic wave sources is greater than or equal to a threshold as a sound area and evaluates an area where the density of elastic wave sources is less than the threshold as a deteriorated area.

The storage 43 stores the transmission data acquired by the acquirer 421 and information indicating the effective range. The storage 43 is configured using a storage device such as a magnetic hard disk drive or a semiconductor storage device.

The display 44 displays evaluation results under the control of the evaluator 425. Furthermore, under the control of the evaluator 425, the display 44 displays a group of wave lines indicating a propagation path of elastic waves to each sensor 20 and an elastic wave source, for example, using a projection method. The display 44 is an image display device such as a liquid crystal display or an organic electroluminescence (EL) display. The display 44 may also be an interface for connecting the image display device to the structure evaluation apparatus 40. In this case, the display 44 generates a video signal for displaying the evaluation results and outputs the video signal to the image display device connected thereto.

FIG. 12 is a sequence diagram showing a flow of a deterioration state evaluation process of the structure evaluation system 100 in the first embodiment. The process of FIG. 12 is executed when the vehicle V travels on the structure S serving as the evaluation target. It is assumed that the evaluator 425 is notified of information indicating the effective range in advance when the process of FIG. 12 starts.

When the vehicle V travels on the structure S serving as the evaluation target, a running unit of the vehicle V comes into contact with the road surface. Thereby, elastic waves within the structure S are generated. Each of the plurality of sensors 20 detects the elastic waves generated within the structure S (step S151). Each of the plurality of sensors 20 converts the detected elastic waves into an electrical signal and outputs the electrical signal to the signal processor 30 (step S152). The electrical signal output from each of the plurality of sensors 20 is amplified by an amplifier (not shown). The amplified electrical signal is converted into a digital signal by an A/D converter.

The signal processor 30 receives the digital signal output from the A/D converter as an input. The arrival time determiner 303 of the signal processor 30 determines each elastic wave arrival time (step S153). Specifically, the arrival time determiner 303 determines the elastic wave arrival time using a clock input while a first gate signal is being input. The arrival time determiner 303 outputs the determined elastic wave arrival time as time information to the transmission data generator 305. The arrival time determiner 303 performs this process for all input digital signals.

The feature value extractor 304 of the signal processor 30 extracts feature values of a noise-removed signal, which is a digital signal input while the first gate signal is being input, using the noise-removed signal (step S154). The feature value extractor 304 outputs parameters related to the extracted feature values to the transmission data generator 305. The transmission data generator 305 generates transmission data including the sensor ID**,** the time information, and the parameters related to the feature values (step S155). The outputter 307 sequentially outputs the transmission data to the structure evaluation apparatus 40 (step S156).

The communicator 41 of the structure evaluation apparatus 40 receives the transmission data output from the signal processor 30. The acquirer 421 acquires the transmission data received by the communicator 41. The acquirer 421 records the acquired transmission data in the storage 43 (step S157). The event extractor 422 extracts transmission data for one event from the transmission data stored in the storage 43. The event extractor 422 outputs the extracted transmission data for one event to the position locator 423 and the distribution generator 424.

The position locator 423 locates the elastic wave source based on the sensor ID and the time information included in the transmission data output from the event extractor 422 and pre-held sensor position information (step S158). Specifically, the position locator 423 first calculates a difference between elastic wave arrival times for each of the plurality of sensors 20. Subsequently, the position locator 423 locates the elastic wave source using the sensor position information and information about the arrival time difference.

The position locator 423 executes the processing of step S158 every time transmission data for one event is output from the event extractor 422 during a measurement period. Thereby, the position locator 423 locates a plurality of elastic wave sources. The position locator 423 outputs position information about the plurality of elastic wave sources to the distribution generator 424. The distribution generator 424 generates an elastic wave source distribution using the position information about the plurality of elastic wave sources output from the position locator 423. Specifically, the distribution generator 424 generates the elastic wave source distribution by plotting the positions of the elastic wave sources indicated in the obtained position information about the plurality of elastic wave sources on virtual data. The distribution generator 424 generates an elastic wave source density distribution using the generated elastic wave source distribution (step S159). Specifically, the distribution generator 424 first divides the elastic wave source distribution into a plurality of areas by dividing the elastic wave source distribution into predetermined segments. Subsequently, the distribution generator 424 calculates an elastic wave source density for each area. Also, the distribution generator 424 generates an elastic wave source density distribution by assigning a value of the calculated elastic wave source density for each area to each area. The distribution generator 424 outputs the generated elastic wave source density distribution to the evaluator 425.

The evaluator 425 evaluates the deterioration state of the structure using the elastic wave source density distribution and information indicating the effective range in a notification from the effective range providing apparatus 10. The evaluator 425 outputs an evaluation result to the display 44. The display 44 displays the evaluation result output from the evaluator 425 (step S161). For example, the display 44 may display the elastic wave source density distribution as the evaluation result, or may display an area considered to be a deteriorated area in a display aspect different from those of other areas. When displaying the evaluation result, the display 44 may be configured to indicate that areas, which are not within the effective range, have not been evaluated, for example, by graying them out and the like.

The effective range providing apparatus 10 configured as described above includes the effective range determiner 152 configured to determine an effective range for evaluation within a target panel serving as an evaluation target for a deterioration state in the structure S based on shape information about the structure S and vehicle information and the provider 153 configured to set information indicating the effective range determined by the effective range determiner 152 for a target for evaluating the deterioration state in the structure S.

Thereby, the operator can ascertain to what extent a result of evaluating the target panel serving as the evaluation target is reliable in the evaluation process before the deterioration state of the structure S is evaluated. Therefore, even when a result of actually evaluating the deterioration state of the structure S is obtained, the operator can evaluate the deterioration state by excluding results of evaluating areas that are not within the effective range. Therefore, it is possible to obtain valid evaluation results.

Moreover, the operator can ascertain the effective range for each target panel in advance by executing the above-described process for each target panel. Therefore, it is possible to efficiently evaluate the deterioration state of the structure by installing sensors on each target panel so that they include the effective range. Furthermore, because there is no need to install sensors on the entire surface of the target panel, the number of sensors can be reduced.

The structure evaluation system 100 evaluates the deterioration state of the structure S within the effective range identified from the information indicating the effective range determined by the effective range providing apparatus 10, and does not evaluate the deterioration state of the structure S outside the effective range. Therefore, the structure evaluation apparatus 40 does not need to perform unnecessary evaluations, thereby reducing the processing load.

### (Second embodiment)

A structural simulation may be used to identify the effective range in a target panel. Therefore, a configuration using the structural simulation to identify the effective range in the target panel will be described in the second embodiment. The configuration of the effective range providing apparatus 10 in the second embodiment is the same as that in the first embodiment, but a process to be performed by the effective range determiner 152 is different. Hereinafter, differences from the first embodiment will be mainly described.

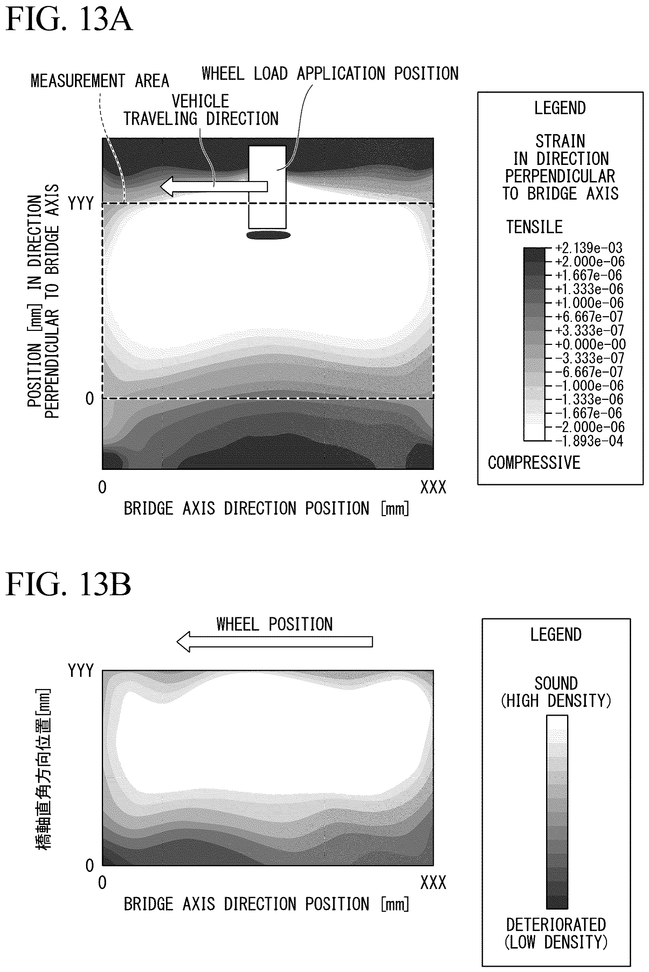

Any structural simulation method can be used, as long as it can derive the strain of a modeled component due to a load. The structural simulation is used to identify the effective range because the elastic wave source density distribution can be estimated based on the strain distribution of the target panel derived by the structural simulation. FIGS. 13A and 13B shows an example of an elastic wave source density distribution and a strain distribution obtained as results of a vehicle running test using a concrete deck test specimen. FIG. 13A shows a strain distribution in the direction perpendicular to the bridge axis (the direction orthogonal to the vehicle traveling direction) obtained by creating a structural analysis model of the test specimen and performing a structural simulation. FIG. 13B shows an elastic wave source density distribution obtained as a result of a vehicle running test using a concrete deck test specimen. In addition, the vehicle is driven at a position shifted upward in the drawing as shown in FIGS. 13A and 13B instead of the center of the test specimen so that the results of FIGS. 13A and 13B are derived and the wheel load application position is also similarly shifted in the structural simulation.

In the strain distribution shown in FIG. 13A, a derived range of the elastic wave source density distribution is indicated by a frame line (a frame line indicating a measurement area). This test specimen is an object known in advance to be sound without internal deteriorate or the like. However, in the elastic wave source density distribution, an area where the elastic wave source density is low can be observed in the lower part of the drawing. When the elastic wave source density is low, this corresponds to the presence of deteriorate. However, this does not indicate that deteriorate is actually present, but rather indicates that there is an area where the evaluation becomes invalid due to a deviation in the wheel position. Looking at the strain distribution, it can be seen that compressive strain is widespread in the area where the evaluation is valid (the center and upper part of the drawing), while strain approaches zero on the lower part of the drawing where the evaluation is invalid. Therefore, it can be seen that it is effective to perform an estimation process from the strain distribution obtained as a structural simulation result when setting the area where the evaluation is effective.

Therefore, the effective range determiner 152 of the effective range providing apparatus 10 determines the effective range based on the strain distribution obtained by the structural simulation. Specifically, the effective range determiner 152 determines an area where the strain value in the strain distribution is less than or equal to a strain threshold as the effective range. The strain threshold is a threshold for comparison with the strain value and is preset.

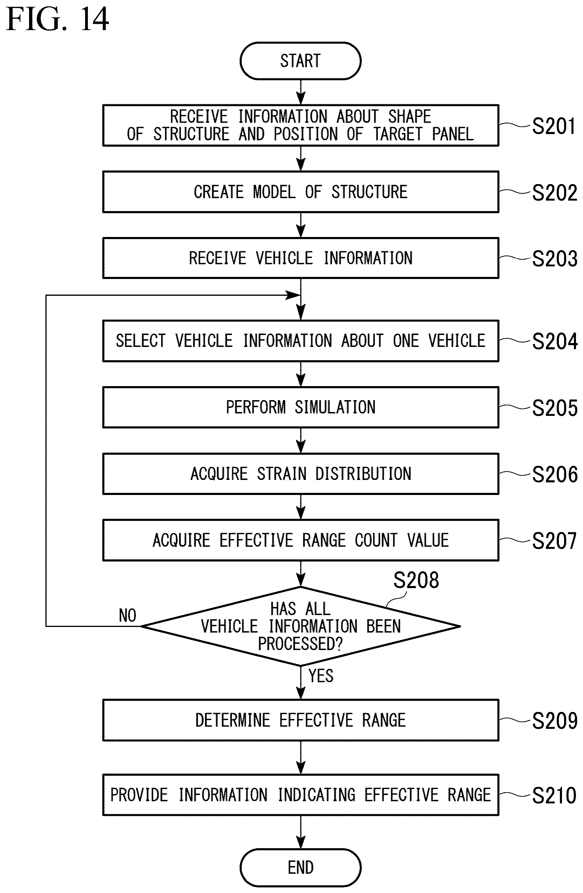

FIG. 14 is a flowchart showing a flow of an effective range setting process performed by the effective range providing apparatus 10 in the first embodiment. In FIG. 14, processing steps similar to those in FIG. 4 are denoted by similar reference signs, and descriptions thereof will be omitted. The operator operates the operation unit 11 of the effective range providing apparatus 10 to input structure shape information about the structure S and information about the position of the target panel in the structure S. The structure shape information is information for describing a shape and lane information of a road structure. The road structure is assumed to be a bridge on which vehicles travel. Here, the shape information is information indicating shapes and connection states of members constituting the bridge, such as main girders, cross beams, deck slabs, railings, and supports. Moreover, the lane information is information indicating positions of lanes and road shoulders on the bridge where vehicles travel. The operation unit 11 outputs the input structure shape information about the structure S and information about the position of the target panel in the structure S to the controller 15 (step S201).

Subsequently, the effective range determiner 152 creates a simulation model based on the input structure shape information (step S202). The simulation model is a model for use in the structural simulation, such as a virtually created structure S based on the input structure shape information. Subsequently, the operator operates the operation unit 11 of the effective range providing apparatus 10 to input vehicle information about one or more vehicles traveling on the structure S. More specifically, the operator inputs the input vehicle information about the vehicles traveling on the target panel. The operation unit 11 outputs the input vehicle information about the one or more vehicles to the controller 15 (step S203). In addition, the vehicle information preferably reflects vehicle-type-specific proportions of vehicles that actually travel on the bridge. The vehicle-type-specific proportions of vehicles that actually travel on the bridge may be calculated, for example, by acquiring the vehicle-type-specific proportions for the number of vehicles used for measurement from a server storing information about types of vehicles that previously traveled on the structure S.

The effective range determiner 152 selects vehicle information about one vehicle from the vehicle information input via the operation unit 11 (step S204). The effective range determiner 152 performs a structural simulation using the selected vehicle information (step S205). In the structural simulation, the strain distribution of the deck according to the load of the target vehicle is calculated and output as a strain distribution diagram. Thereby, the effective range determiner 152 acquires a strain distribution (step S206). Subsequently, the effective range determiner 152 sets an effective range count value for the target vehicle based on the acquired strain distribution (step S207).

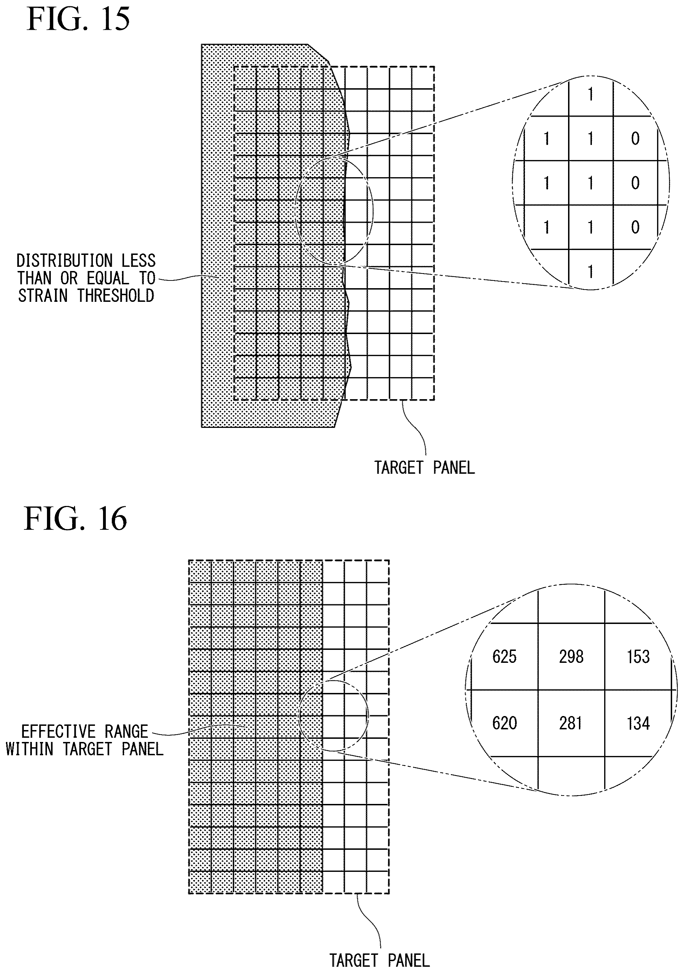

Specifically, the effective range determiner 152 focuses on the strain distribution near the target panel in the structural simulation results and identifies a range in which the strain value is less than or equal to the strain threshold (i.e., a range in which compressive strain spreads). The effective range determiner 152 determines the identified range as the effective range. The effective range determiner 152 increments the count value of the corresponding area by 1 by the number of effective ranges determined within the target panel. Here, the strain threshold is, for example, a value within a range of -1.0e⁻¹⁰ to 1.0e⁻⁵, and is set to, for example, -1.0e⁻⁸. A method for setting count values in an effective range within the target panel will be described with reference to FIG. 15. To set count values in areas within the target panel, the effective range determiner 152 divides the target panel in a mesh shape. The size of the mesh is, for example, 100 mm, but is not limited to this size and the mesh may be divided more coarsely or finely. Moreover, the mesh may be divided only vertically.

The effective range determiner 152 increments the count value by 1 with respect to cells belonging to the effective range (cells whose strain value is less than or equal to the strain threshold), and does not increment the count value (sets the count value to 0) for cells that do not belong to the effective range (cells whose strain value is not less than or equal to the strain threshold). A counter value of "1" is set for hatched cells in the target panel in FIG. 15, and a counter value of "0" is set for unhatched cells. Subsequently, the effective range determiner 152 determines whether or not all of the input vehicle information has been processed (step S208). When a structural simulation has been performed using all of the input vehicle information, the effective range determiner 152 determines that all of the vehicle information has been processed. On the other hand, when a structural simulation has not been performed using all of the input vehicle information, the effective range determiner 152 determines that all of the vehicle information has not been processed.

When it is determined that all of the input vehicle information has not been processed (step S208-NO), the effective range determiner 152 iteratively executes the processing from step S204. **In** this case, the effective range determiner 152 selects vehicle information that has not been selected in the processing of step S204. On the other hand, when the effective range determiner 152 determines that all of the input vehicle information has been processed (step S208-YES), the processing from step S209 is executed. When the count value after all of the vehicle information is processed is in a state shown in FIG. 16 and the threshold is 600, the effective range determiner 152 determines the hatched area where the count value is greater than or equal to 600 as the effective range. The results shown in FIG. 16 are obtained as a result of iteratively executing a process for extracting areas where the strain value is less than or equal to the strain threshold in the strain distribution in accordance with the number of vehicle information. **In** other words, the results shown in FIG. 16 correspond to a frequency distribution indicating the number of effective range determinations. The effective range determiner 152 determines the final effective range based on the frequency distribution shown in FIG. 16.

Although the effective range determiner 152 extracts an area where a strain value is less than or equal to the strain threshold as the effective range in the process shown in FIG. 14, dynamic strain associated with the traveling of vehicles using a structural simulation may be calculated and an area where a strain change rate is higher than or equal to a certain rate may be extracted as the effective range.

Although the effective range determiner 152 determines the effective range based on information about a plurality of vehicles in FIG. 14, the effective range may also be set based on a model of a representative vehicle that travels on the structure S serving as the evaluation target. In the case of such a configuration, the processing of step S208 in FIG. 14 is completed with information about a first vehicle, and the effective range determiner 152 executes the processing of step S209. Therefore, the threshold used in step S209 is 1. When the representative vehicle model is selected, for example, it is only necessary to select a vehicle that travels most frequently (e.g., a specific compact passenger car). On the other hand, the vehicle may be an average vehicle (even a non-existent vehicle) for all traveling vehicle types. For example, the vehicle specifications may be configured by calculating an average vehicle weight of all traveling vehicles, an average weight per axle, and an average position (tread) of the left and right wheels.

### (Application example)

In the second embodiment, as in the first embodiment, the effective range information determined by the effective range providing apparatus 10 may be applied to a system for evaluating the deterioration state of a structure. Because the specific configuration and process are similar to those in the first embodiment, descriptions thereof will be omitted.

The effective range providing apparatus 10 in the second embodiment configured as described above can determine the effective range using a method different from that of the first embodiment. Therefore, as in the first embodiment, it is possible to obtain effective evaluation results. The effective range providing apparatus 10 in the second embodiment determines an effective range based on a strain distribution indicating a value of strain generated by the vehicle V in the structure S. Thereby, the effective range can be determined by a simple method.

### (Third embodiment)

Although a configuration in which the range where the cell value is greater than or equal to the threshold among ranges of the target panel is determined to be the effective range has been described in the first and second embodiments, a configuration in which a value of an elastic wave source density distribution is corrected in accordance with a cell value will be described in a third embodiment.

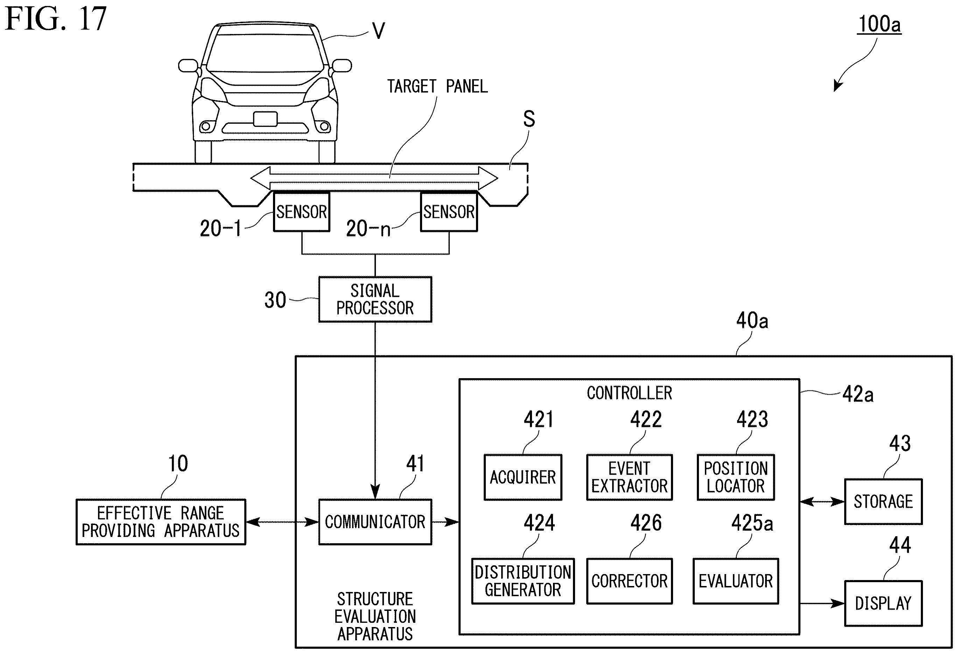

FIG. 17 is a diagram showing a configuration of a structure evaluation system 100a according to the third embodiment. The structure evaluation system 100a is used to evaluate the soundness of a structure S. The structure evaluation system 100a includes an effective range providing apparatus 10, a plurality of sensors 20-1 to 20-n, a signal processor 30, and a structure evaluation apparatus 40a. Unlike the structure evaluation system 100 shown in FIG. 10, the structure evaluation system 100a includes the structure evaluation apparatus 40a instead of the structure evaluation apparatus 40. The other constituent elements of the structure evaluation system 100a are similar to those in the first or second embodiment.

The structure evaluation apparatus 40a evaluates a deterioration state of the structure S based on elastic waves detected by each sensor 20 and an effective range determined by the effective range providing apparatus 10. **In** a method for determining the effective range by the effective range providing apparatus 10, the method of either the first or second embodiment may be used. The structure evaluation apparatus 40a includes a communicator 41, a controller 42a, a storage 43, and a display 44. The controller 42a controls the entire structure evaluation apparatus 40a. The controller 42a is configured using a processor such as a CPU and a memory. By executing a program, the controller 42a functions as an acquirer 421, an event extractor 422, a position locator 423, a distribution generator 424, an evaluator 425a, and a corrector 426.

Some or all of the functional units of the acquirer 421, the event extractor 422, the position locator 423, the distribution generator 424, the evaluator 425a, and the corrector 426 may be implemented by hardware such as an ASIC, a PLD, or an FPGA, or may be implemented by software and hardware in cooperation. The program may be recorded on a computer-readable recording medium. Examples of the computer-readable recording medium include portable media such as flexible disks, optical magnetic disks, ROMs, and CD-ROMs, and non-transitory storage media such as hard disks built into computer systems. The program may be transmitted via a telecommunications line.

Some of the functions of the acquirer 421, the event extractor 422, the position locator 423, the distribution generator 424, the evaluator 425a, and the corrector 426 do not need to be pre-installed in the structure evaluation apparatus 40a and may be implemented by installing an additional application program on the structure evaluation apparatus 40a.

The corrector 426 corrects information based on a position location process performed by the position locator 423 using a correction value determined in accordance with information indicating the effective range determined by the effective range providing apparatus 10. In the third embodiment, a correction value, for example, is calculated based on a distribution of count values for the target panel obtained using all vehicle information calculated in the first or second embodiment. The information based on the position location process is information obtained before the position location process (e.g., an elastic wave amplitude) or using a location result. For example, the information based on the position location process is the elastic wave source density distribution. In the following description, an example in which the information based on the position location process is the elastic wave source density distribution will be described.

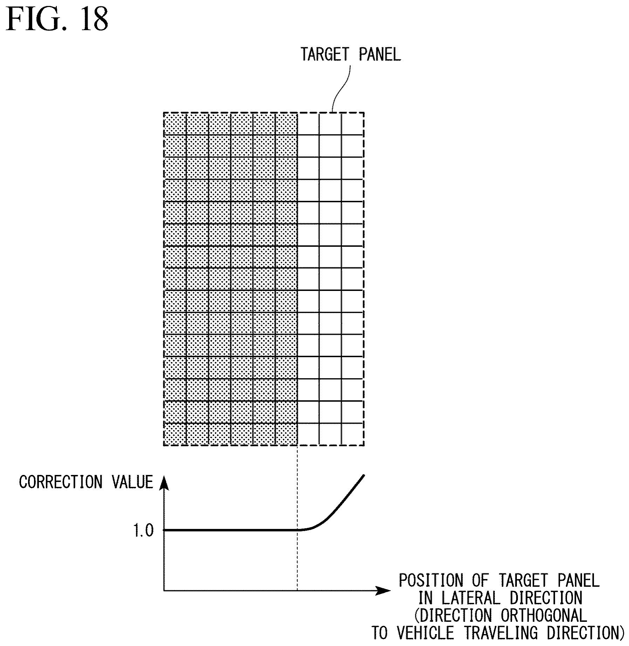

An example of the correction value for use in the corrector 426 will be described using FIG. 18. In FIG. 18, the distribution of count values for the target panel obtained using all vehicle information is shown in the upper part, and an example of the correction value is shown in the lower graph. In the correction value graph, the horizontal axis represents a position of the target panel in the horizontal direction, and the vertical axis represents the correction value. The correction value represents a coefficient (weighting coefficient) by which a value of the elastic wave source density distribution is multiplied. The corrector 426 uses a correction value of 1.0 for areas where correction is assumed to be unnecessary based on the count value distribution, and a value greater than 1.0 for areas where correction is assumed to be necessary. Thus, the correction value is a value that does not cause correction in areas where correction is assumed to be unnecessary.

Areas where correction is assumed to be unnecessary are areas serving as the effective ranges within the target panel. On the other hand, areas where correction is assumed to be necessary are areas outside the effective range within the target panel and are areas where elastic wave sources are not considered to be sufficiently obtained. The correction value for an area where correction is assumed to be necessary is, for example, a value obtained by dividing an average count value of each cell in the area (effective range) where correction is assumed to be unnecessary by a count value of each cell where correction is assumed to be necessary. Although correction values are set only in the horizontal direction on the drawing in the description of FIG. 18, correction values may also be set in the vertical direction on the drawing. Moreover, correction values may be set two-dimensionally.

The evaluator 425a evaluates the deterioration state of the structure S based on the corrected information. Specifically, the evaluator 425a evaluates the deterioration state of the structure S using the corrected elastic wave source density distribution. For example, the evaluator 425a evaluates areas where the elastic wave source density is greater than or equal to a threshold as sound areas, and evaluates areas where the elastic wave source density is less than the threshold as deteriorated areas.

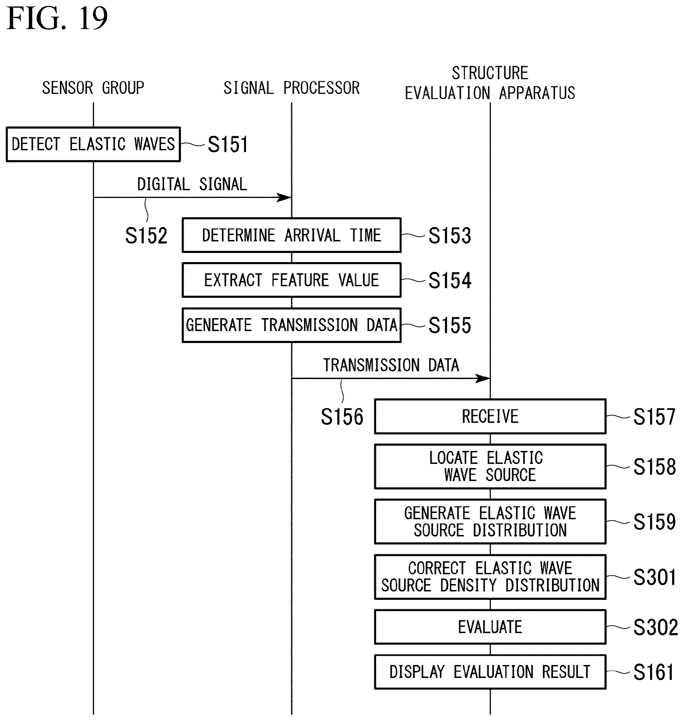

FIG. 19 is a sequence diagram showing a flow of the deterioration state evaluation process performed by the structure evaluation system 100a in the third embodiment. The process in FIG. 19 is executed when a vehicle V travels on the structure S serving as the evaluation target. In addition, when the process in FIG. 19 starts, it is assumed that the corrector 426 has been notified of information indicating the effective range in advance. In FIG. 19, the processing steps similar to those in FIG. 12 are designated by similar reference signs as in FIG. 12, and descriptions thereof will be omitted.

After steps S151 to S159 are executed, the corrector 426 calculates a correction value based on the information indicating the effective range obtained from the effective range providing apparatus 10. The corrector 426 corrects the elastic wave source density distribution based on the elastic wave source density distribution output from the distribution generator 424 and the calculated correction value (step S301). Specifically, the corrector 426 corrects the elastic wave source density distribution by multiplying a density value in each area of the elastic wave source density distribution by a value corresponding to the position indicated by the correction value. The corrector 426 outputs the corrected elastic wave source density distribution to the evaluator 425a. The evaluator 425a uses the corrected elastic wave source density distribution to evaluate the deterioration state of the structure. The evaluator 425a outputs an evaluation result to the display 44. Subsequently, step S161 is executed.

According to the structure evaluation system 100a configured as described above, the structure evaluation apparatus 40a corrects the elastic wave source density distribution using a correction value determined based on information indicating the effective range. Thus, unlike the first and second embodiments, the structure evaluation apparatus 40a sets areas outside the effective range of the target panel as evaluation targets. Therefore, it is possible to evaluate the deterioration state of the entire target panel.

### (Modification example 1 common to first to third embodiments)

The signal processor 30 may be included in the structure evaluation apparatus 40 or 40a.

### (Modification example 2 common to first to third embodiments)

In each embodiment, a configuration in which a plurality of sensors 20-1 to 20-n are connected to a single signal processor 30 is shown. The structure evaluation system 100 or 100a may include a plurality of signal processors 30 and sensors 20 may be connected to different signal processors 30.

### (Modification example 3 common to first to third embodiments)

Some or all of the functional units of the structure evaluation apparatus 40 or 40a may be included in another apparatus. For example, the display 44 of the structure evaluation apparatus 40 or 40a may be included in another apparatus. In the case of this configuration, the structure evaluation apparatus 40 or 40a transmits evaluation results to the other apparatus including the display 44. The other apparatus including the display 44 displays the received evaluation results.

### (Modification example 4 common to first to third embodiments)

Although the effective range providing apparatus 10 and the structure evaluation apparatus 40 or 40a are included as separate apparatuses in the structure evaluation system 100 or 100a in each embodiment, the effective range providing apparatus 10 and the structure evaluation apparatus 40 or 40a may also be configured as an integrated apparatus. In the case of this configuration, the structure evaluation apparatus 40 or 40a has some of the functions of the effective range providing apparatus 10. For example, the structure evaluation apparatus 40 or 40a includes the operation unit 11, the effective range determiner 152, and the provider 153 included in the effective range providing apparatus 10. Also, in the first and second embodiments, it is only necessary for the provider 153 to provide the evaluator 425 with information indicating the effective range determined by the effective range determiner 152. In the third embodiment, it is only necessary for the provider 153 to provide the corrector 426 with information indicating the effective range determined by the effective range determiner 152.

According to at least one of the embodiments described above, the effective range determiner 152 configured to determine an effective range for evaluation within a target area serving as an evaluation target for a deterioration state in a structure based on shape information about a shape of the structure on which a vehicle can travel and vehicle information about the vehicle traveling on the structure; and the provider 153 configured to provide information indicating the effective range determined by the effective range determiner 152 are provided such that effective evaluation results can be obtained.

While certain embodiments have been described, these embodiments have been presented by way of example only, and are not intended to limit the scope of the inventions. Indeed, the novel embodiments described herein may be embodied in a variety of other forms; furthermore, various omissions, substitutions and changes in the form of the embodiments described herein may be made without departing from the spirit of the inventions. The accompanying claims and their equivalents are intended to cover such forms or modifications as would fall within the scope and spirit of the inventions.

### Clause

1. An effective range providing apparatus comprising:
   an effective range determiner configured to determine an effective range for evaluation within a target area serving as an evaluation target for a deterioration state in a structure based on shape information about a shape of the structure on which a vehicle can travel and vehicle information about the vehicle traveling on the structure; and
   a provider configured to provide information indicating the effective range determined by the effective range determiner.
2. The effective range providing apparatus according to claim 1,
   wherein the effective range determiner identifies wheel positions of the vehicle in the target area based on the shape information, the vehicle information, and position information of the target area, and determines the effective range based on the identified wheel positions of the vehicle.
3. The effective range providing apparatus according to claim 2,
   wherein the effective range determiner determines a range including a predetermined distance from the vehicle in a left and right direction in a travel direction as the effective range based on the wheel positions of the vehicle.
4. The effective range providing apparatus according to claim 2,
   wherein the effective range determiner determines at least an area between left and right wheels of the vehicle as the effective range when the target area is included between the left and right wheels of the vehicle.
5. The effective range providing apparatus according to claim 2,
   wherein the effective range determiner determines a final effective range based on a frequency distribution indicating the number of effective range determinations obtained as a result of iteratively executing a process for determining the effective range within the target area in accordance with the number of vehicle information.
6. The effective range providing apparatus according to claim 1,
   wherein the effective range determiner determines the effective range based on a strain distribution indicated by a value of strain generated by the vehicle in the structure.
7. The effective range providing apparatus according to claim 6,
   wherein the effective range determiner determines the effective range based on an area in the strain distribution where the strain value is less than or equal to a predetermined threshold.
8. The effective range providing apparatus according to claim 6,
   wherein the effective range determiner determines a final effective range based on a frequency distribution indicating the number of effective range determinations obtained as a result of iteratively executing a process for extracting an area where the strain value is less than or equal to a predetermined threshold in the strain distribution in accordance with the number of vehicle information.
9. The effective range providing apparatus according to claim 5 or 8,
   wherein the effective range determiner determines a range exceeding a certain frequency as the final effective range in the frequency distribution.
10. A structure evaluation apparatus comprising:
   a position locator configured to locate positions of sources of a plurality of elastic waves detected by a plurality of sensors that detect elastic waves generated from a structure based on the plurality of elastic waves; and
   an evaluator configured to evaluate the deterioration state of the structure based on the information indicating the effective range determined by the effective range providing apparatus according to claim 1 and information based on a position location process of the position locator.
11. The structure evaluation apparatus according to claim 10, further comprising a corrector configured to correct the information based on the position location process of the position locator using a correction value determined based on the information indicating the effective range,
   wherein the evaluator evaluates the deterioration state of the structure based on the information corrected by the corrector.
12. A structure evaluation system comprising:
   a plurality of sensors configured to detect elastic waves generated from a structure;
   a position locator configured to locate positions of sources of a plurality of elastic waves detected by the plurality of sensors based on the plurality of elastic waves; and
   an evaluator configured to evaluate the deterioration state of the structure based on the information indicating the effective range determined by the effective range providing apparatus according to claim 1 and information based on a position location process of the position locator.
13. An effective range providing method comprising:
   determining an effective range for evaluation within a target area serving as an evaluation target for a deterioration state in a structure based on shape information about a shape of the structure on which a vehicle can travel and vehicle information about the vehicle traveling on the structure; and
   providing information indicating the determined effective range.

## Claims

1. An effective range providing apparatus (10) comprising:
an effective range determiner (152) configured to determine an effective range for evaluation within a target area serving as an evaluation target for a deterioration state in a structure based on shape information about a shape of the structure on which a vehicle can travel and vehicle information about the vehicle traveling on the structure; and
a provider (153) configured to provide information indicating the effective range determined by the effective range determiner (152).

2. The effective range providing apparatus (10) according to claim 1,
wherein the effective range determiner (152) identifies wheel positions of the vehicle in the target area based on the shape information, the vehicle information, and position information of the target area, and determines the effective range based on the identified wheel positions of the vehicle.

3. The effective range providing apparatus (10) according to claim 2,
wherein the effective range determiner (152) determines a range including a predetermined distance from the vehicle in a left and right direction in a travel direction as the effective range based on the wheel positions of the vehicle.

4. The effective range providing apparatus (10) according to claim 2,
wherein the effective range determiner (152) determines at least an area between left and right wheels of the vehicle as the effective range when the target area is included between the left and right wheels of the vehicle.

5. The effective range providing apparatus (10) according to claim 2,
wherein the effective range determiner (152) determines a final effective range based on a frequency distribution indicating the number of effective range determinations obtained as a result of iteratively executing a process for determining the effective range within the target area in accordance with the number of vehicle information.

6. The effective range providing apparatus (10) according to claim 1,
wherein the effective range determiner (152) determines the effective range based on a strain distribution indicated by a value of strain generated by the vehicle in the structure.

7. The effective range providing apparatus (10) according to claim 6,
wherein the effective range determiner determines the effective range based on an area in the strain distribution where the strain value is less than or equal to a predetermined threshold.

8. The effective range providing apparatus (10) according to claim 6,
wherein the effective range determiner (152) determines a final effective range based on a frequency distribution indicating the number of effective range determinations obtained as a result of iteratively executing a process for extracting an area where the strain value is less than or equal to a predetermined threshold in the strain distribution in accordance with the number of vehicle information.

9. The effective range providing apparatus (10) according to claim 5 or 8,
wherein the effective range determiner (152) determines a range exceeding a certain frequency as the final effective range in the frequency distribution.

10. A structure evaluation apparatus (40, 40a) comprising:
a position locator (423) configured to locate positions of sources of a plurality of elastic waves detected by a plurality of sensors (20-1 to 20-n) that detect elastic waves generated from a structure based on the plurality of elastic waves; and
an evaluator (425, 425a) configured to evaluate the deterioration state of the structure based on the information indicating the effective range determined by the effective range providing apparatus (10) according to claim 1 and information based on a position location process of the position locator (423).

11. The structure evaluation apparatus (40a) according to claim 10, further comprising a corrector configured to correct the information based on the position location process of the position locator (423) using a correction value determined based on the information indicating the effective range,
wherein the evaluator (425a) evaluates the deterioration state of the structure based on the information corrected by the corrector.

12. A structure evaluation system (100, 100a) comprising:
a plurality of sensors (20-1 to 20-n) configured to detect elastic waves generated from a structure;
a position locator (423) configured to locate positions of sources of a plurality of elastic waves detected by the plurality of sensors (20-1 to 20-n) based on the plurality of elastic waves; and
an evaluator (425, 425a) configured to evaluate the deterioration state of the structure based on the information indicating the effective range determined by the effective range providing apparatus (10) according to claim 1 and information based on a position location process of the position locator (423).

13. An effective range providing method comprising:
determining (S109, 209) an effective range for evaluation within a target area serving as an evaluation target for a deterioration state in a structure based on shape information about a shape of the structure on which a vehicle can travel and vehicle information about the vehicle traveling on the structure; and
providing (S110, S210) information indicating the determined effective range.
